# EUROPEAN PATENT SPECIFICATION

(11) **EP 3 459 835 B1**
(45) Date of publication and mention of the grant of the patent: **11.08.2021**
(21) Application number: 18195143.5
(22) Date of filing: 18.09.2018
(51) Int. Cl.: B62K 11/10, F01N 3/28, F01N 3/10, F01N 13/18

(54) **EXHAUST DEVICE OF SADDLE RIDING VEHICLE**
ABGASVORRICHTUNG EINES SATTELFAHRZEUGS
DISPOSITIF D'ÉCHAPPEMENT DE VÉHICULE À SELLE

(30) Priority: 25.09.2017 JP 2017184018
(43) Date of publication of application: 27.03.2019
(73) Proprietor: HONDA MOTOR CO., LTD., Tokyo 107-8556 (JP)
(72) Inventor: KURASAWA, Yuji, Saitama, 351-0193 (JP); KUBO, Toshihiro, Saitama, 351-0193 (JP); YOKOMORI, Tetsuhito, Saitama, 351-0193 (JP)
(74) Representative: Weickmann & Weickmann PartmbB

(56) References cited:
- EP-A1- 2 075 424
- WO-A1-2018/030110
- WO-A1-2018/179915
- JP-A- H04 163 287
- US-A1- 2015 166 139

## Description

### [Technical Field]

The present invention relates to an exhaust device of a saddle riding vehicle having a high effect of cooling a catalyst using traveling air.

### [Background Art]

For example, Patent Document 1 below discloses, in a two-wheel scooter-type motorcycle installed with a catalyst device interposed in the middle of an exhaust pipe and with an underfloor fuel tank, an exhaust device in which a catalyst device is arranged in a space formed between a fuel tank and a vehicle body cover and in which a catalyst loaded in the catalyst device is cooled by traveling air from the front side.

In the above-mentioned structure described in Patent Document 1, the catalyst is cooled by making use of traveling air, and it is therefore a prerequisite that the catalyst device is arranged between the fuel tank and the vehicle body cover. As a result, restriction is imposed on the arrangement layout of the catalyst device. Further, considering an installation space, an exhaust pipe is connected to the catalyst device to be directed in a longitudinal direction of the catalyst device. In such arrangement, the catalyst device is disposed such that the longitudinal direction thereof is oriented in a vehicle longitudinal direction. In this case, the catalyst device is naturally positioned on a lateral side of the fuel tank, so that the catalyst device is liable to easily interfere with the ground when the vehicle banks. Accordingly, to ensure a bank angle while avoiding such an interference, there is a concern that the size of the vehicle in height direction is increased.

Meanwhile, a structure can be considered where the longitudinal direction of the catalyst device is oriented in the vehicle width direction and the catalyst device is arranged at an intermediate position in the vehicle width direction thus suppressing the increase in size of the vehicle in the height direction, while ensuring a required bank angle. However, when the catalyst device were arranged in an intermediate position in the vehicle width direction, the vehicle body cover and vehicle equipment would be arranged in front of the catalyst device, and hence it would be difficult to cool the catalyst by making use of traveling air.

Document US2015166139 shows another known saddle riding vehicle comprising an exhaust device, wherein the vehicle comprises: a body frame; a swing-type power unit including a cylinder and a cylinder head which are arranged with a cylinder axis inclined frontward in an approximately horizontal direction and are mounted on a crankcase, the swing-type power unit being swingably supported on the body frame by way of a link member; an exhaust pipe connected to the cylinder head; a catalyst device provided in the exhaust pipe in such a manner that the exhaust pipe is connected to both ends of the catalyst device in a longitudinal direction of the catalyst device; and the body frame has a foot placing portion positioned in front of the swing-type power unit, wherein the catalyst device is arranged such that at least a part of the catalyst device is disposed below the cylinder as viewed in a side view of the vehicle, an undercover is arranged below the foot placing portion and in front of the catalyst device.

### [Prior Art]

### [Patent Document]

[Patent Document 1] JP 2015-1130074 A (FIGS. 1 to 7)

### [Summary of Invention]

### [Underlying Problem to be Solved]

The present invention has been made in view of the prior art and the underlying problem, and it is an object of the present invention to provide an exhaust device of a saddle riding vehicle which can cool a catalyst loaded in a catalyst device by making use of traveling air while preventing the catalyst device from interfering with the ground when a vehicle banks and while suppressing large-sizing of the vehicle in a height direction for ensuring a required bank angle.

### [Means to solve the Problem]

In order to achieve the object, according to the present invention, there is provided a saddle riding vehicle comprising an exhaust device, wherein the vehicle comprises:a body frame;a swing-type power unit including a cylinder and a cylinder head which are arranged with a cylinder axis inclined frontward in an approximately horizontal direction and are mounted on a crankcase, the swing-type power unit being swingably supported on the body frame by way of a link member;an exhaust pipe connected to the cylinder head;a catalyst device provided in the exhaust pipe in such a manner that the exhaust pipe is connected to both ends of the catalyst device in a longitudinal direction of the catalyst device;the body frame has a foot placing portion positioned in front of the swing-type power unit;the catalyst device is arranged such that at least a part of the catalyst device is disposed below the cylinder as viewed in a side view of the vehicle, and an undercover is arranged below the foot placing portion and in front of the catalyst device, characterized in that the longitudinal direction of the catalyst device is directed in a width direction of the vehicle; the undercover has a bottom surface formed thereon with an upright air guide rib extending in the longitudinal direction of the vehicle; and the air guide rib has a rear end directed toward the catalyst device as viewed in a plan view and a bottom surface rear end of the bottom surface directed toward the catalyst device.

With such a configuration, with respect to the catalyst device to which the exhaust pipe is connected in the longitudinal direction, the catalyst device is arranged such that at least a part of the catalyst device is disposed below the cylinder and the longitudinal direction of the catalyst device is directed in a vehicle width direction. Accordingly, the catalyst device is arranged at a position close to a center region in the vehicle width direction, and hence it is possible to prevent interference of the catalyst device with the ground when the vehicle banks. That is, by avoiding the positioning of the catalyst device on a lateral side of the vehicle, it is possible to suppress large-sizing of the vehicle in a height direction for ensuring a required bank angle. In this case, the bottom surface rear end of the undercover is directed toward the catalyst device, and hence traveling air received by the undercover can be guided to the catalyst device, thereby enabling a catalyst loaded in the catalyst device to be cooled by making use of the traveling air.

In a preferred form of the invention, the catalyst device is positioned between the crankcase and a connecting portion of the exhaust pipe with the cylinder head with respect to a longitudinal direction of the vehicle as viewed in a side view of the vehicle, the catalyst device being arranged at a position higher than a lowermost end of the undercover as viewed in the side view of the vehicle; and the bottom surface rear end of the undercover is formed in an upwardly bent manner as viewed in the side view of the vehicle.

With such a configuration, the catalyst device is arranged with the longitudinal direction thereof directed in the vehicle width direction. Consequently, the catalyst device can be positioned in a narrow space between the cylinder head and the crankcase and close to the cylinder, and hence the arrangement position of the catalyst device can be set higher than the lowermost end of the undercover and thereby the configuration is further advantageous for banking of the vehicle. Also in this case, the bottom surface rear end of the undercover is formed in an upwardly bent manner, and hence traveling air is guided to the catalyst device arranged at a position higher than the undercover and cools the catalyst.

According to the invention, the undercover has a bottom surface formed thereon with an upright air guide rib extending in the longitudinal direction of the vehicle, and the air guide rib has a rear end directed toward the catalyst device as viewed in a plan view.

With such a configuration, by providing the air guide rib on the bottom surface of the undercover arranged in front of the catalyst device and by directing the air guide rib toward the catalyst device, traveling air can be guided to the catalyst device so that the catalyst can be cooled.

In a preferred from of the invention, the air guide rib has an upright height gradually increasing from a front side to a rear side in the longitudinal direction of the vehicle.

With such a configuration, by gradually increasing the upright height of the air guide rib from the front side to the rear side, an effect of guiding traveling air received by the bottom surface of the undercover is increased. Accordingly, traveling air can be guided to the catalyst device with an increased effectiveness so that the effect of cooling the catalyst by traveling air can be enhanced.

In a further preferred from of the invention, the undercover has front portion formed with an opening portion communicating with the side of the foot placing portion.

With such a configuration, traveling air from the front side of the vehicle is taken through the opening portion, and the bottom surface rear end of the undercover is directed toward the catalyst device, and hence traveling air which passes through between the undercover and the foot placing portion can be guided to the catalyst device, and the catalyst device can be cooled by making use of the traveling air.

### [Advantageous Effects of Invention]

According to the exhaust device of a saddle riding vehicle of the present invention, the catalyst device to which the exhaust pipe is connected in a longitudinal direction thereof is arranged such that at least a part of the catalyst device is disposed below the cylinder and the longitudinal direction of the catalyst device is oriented in the vehicle width direction. Accordingly, the catalyst device is arranged at a position close to a center region in the vehicle width direction, and hence it is possible to prevent the catalyst device from interfering with the ground when the vehicle banks. That is, by avoiding the positioning of the catalyst device on a lateral side of the vehicle, it is possible to suppress large-sizing of the vehicle in a height direction for ensuring a required bank angle. In this case, the bottom surface rear end of the undercover is directed toward the catalyst device, and hence traveling air received by the undercover can be guided to the catalyst device, thereby enabling the catalyst loaded in the catalyst device to be cooled by making use of traveling air.

### [Brief Description of the Drawings]

FIG. 1 is a schematic right side view of a two-wheel motorcycle which includes an exhaust device for a saddle riding vehicle according to an embodiment of the invention;
FIG. 2 is a perspective view of a bottom surface of the motorcycle shown in FIG. 1 as viewed from a left rear side;
FIG. 3 is a bottom plan view of the motorcycle shown in FIG. 1 and illustrating an area from an undercover to a part of a crankcase as viewed from below the motorcycle and as viewed in a direction indicated by an arrow III in FIG. 2;
FIG. 4 is a sectional left side view of a main part at the center of the motorcycle shown in FIG. 1, illustrating the undercover to a part of the crankcase;
FIG. 5 is a bottom plan view of the undercover in a state where the undercover is removed from the motorcycle shown in FIG. 3;
FIG. 6 is a perspective view of a lower surface of the undercover shown in FIG. 5 as viewed from a left rear side;
FIG. 7 is a perspective view of an upper surface of the undercover shown in FIG. 5 as viewed from a left rear side; and
FIG. 8 is a sectional front view of the motorcycle behind the front wheel as viewed in a direction indicated by an arrow VIII-VIII in FIG. 1.

### [Embodiment of the Invention]

An exhaust device of a saddle riding vehicle according to one embodiment of the present invention will be described with reference to the drawings.

In the description of the specification and claims, directions such as front, rear, left, right, up, and down are directions of a vehicle in a state where the exhaust device of the saddle riding vehicle according to this embodiment is mounted on the vehicle. In this embodiment, the vehicle is a two-wheel saddle riding vehicle. To be more specific, the saddle riding vehicle to which the embodiment of the invention is applied is a two-wheel scooter-type motorcycle (hereinafter simply referred to as "motorcycle").

In the drawings, an arrow FR indicates a front side of the vehicle, an arrow LH indicates a left side of the vehicle, an arrow RH indicates a right side of the vehicle, and an arrow UP indicates an upper side of the vehicle.

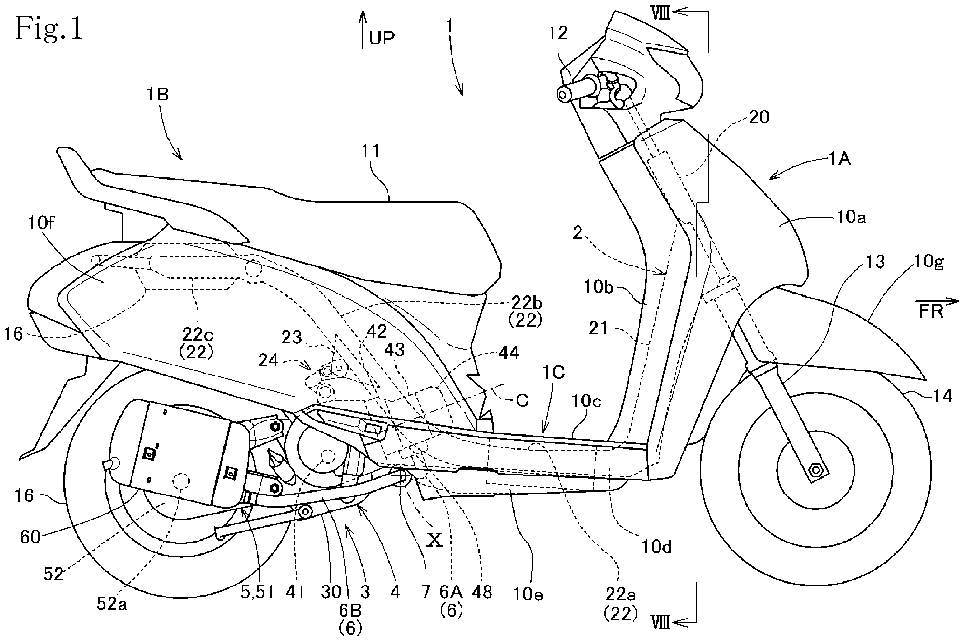

FIG. 1 to FIG. 8 show one embodiment of the present invention. FIG. 1 is a schematic right side view of a motorcycle 1 which includes the exhaust device for the saddle riding vehicle according to the embodiment of the invention.

In the motorcycle 1 of this embodiment, a vehicle body front portion 1A and a vehicle body rear portion 1B are connected to each other by way of a low foot placing portion (floor portion) 1C, and a body frame 2 forming a skeleton of the vehicle body is essentially formed of a down frame 21 and a main frame 22.

That is, the down frame 21 extends downward from a head pipe 20 of the vehicle body front portion 1A, and to the down frame 21 is connected a pair of left and right lower frame portions 22a of the main frame 22 extending rearward in an approximately horizontal direction from a lower end of the down frame 21. The main frame 22 extending obliquely rearward and upward from rear ends of the lower frame portions 22a forms a pair of left and right inclined portions 22b. Upper portions of the inclined portions 22b are further bent thus forming a pair of left and right horizontal portions 22c which extend rearward in an approximately horizontal direction.

An accommodating box not shown in the figure is supported on the inclined portions 22b and the horizontal portions 22c of the main frame 22, and an occupant's seat 11 is arranged so as to cover an upper side of the accommodating box.

Meanwhile, in the vehicle body front portion 1A, a handlebar 12 is provided on an upper side of the head pipe 20 in a state where the handlebar 12 is pivotally supported on the head pipe 20, a front fork 13 extends downward, and a front wheel 14 is rotatably supported on a lower end of the front fork 13.

A power unit support bracket 23 is mounted on the inclined portions 22b of the main frame 22 respectively in a rearwardly projecting manner, and a swing-type power unit (hereinafter simply referred to as "power unit") 3 is connected to and supported on the power unit support brackets 23 by way of link members 24 in a vertically swingable manner.

That is, the motorcycle 1 applied with this embodiment adopts an upper link support structure for supporting the power unit 3. As a result, it is possible to provide a space in which a catalyst device 7 to be described later can be disposed below a front portion of the power unit 3.

In the vehicle body front portion 1A, the head pipe 20 and the down frame 21 are covered by a front cover 10a and a leg shield 10b from both a front side and a rear side of these parts, respectively.

The foot placing portion (floor portion) 1C is provided on the main frame 22 of the body frame 2 on a side where the pair of left and right lower frame portions 22a are disposed. An upper side of the lower frame portions 22a is covered by a floor cover 10c, left and right sides of the lower frame portions 22a are respectively covered by floor side covers 10d in a longitudinal direction of the vehicle body, and a lower side of the lower frame portions 22a is covered by an undercover 10e.

In the vehicle body rear portion 1B, a fuel tank 16 is mounted on the horizontal portions 22c of the main frame 22 below a rear portion of the occupant's seat 11, and left and right sides and a rear side of the inclined portions 22b and the horizontal portions 22c of the main frame 22 are covered by a body cover 10f, respectively. A front fender 10g is provided above the front wheel 14.

The respective covers 10a to 10f are formed by using suitable materials. Although the undercover 10e is preferably formed by using a resin material, material for forming the undercover 10e is not limited to a resin material.

The power unit 3 includes an internal combustion engine 4, and also includes a power transmission portion 5 which incorporates a belt-type continuously variable transmission 51 from the internal combustion engine 4 to a rear side of the engine 4. A rear wheel 15 is mounted on a rear axle 52a which is an output shaft of a speed reduction gear mechanism 52 mounted on a rear portion of the power transmission portion 5.

A rear cushion not shown in the figure is interposed between the rear portion of the power transmission portion 5 and the horizontal portions 22c on rear portions of the main frame 22.

In the internal combustion engine 4, a crankshaft 41 is rotatably supported on the crankcase 30 in a state where the crankshaft 41 is directed in a vehicle width direction, that is, in a lateral direction. A cylinder 42, a cylinder head 43, and a cylinder head cover 44 are sequentially overlapped and fastened to each other in front of the crankcase 30 in a state where a cylinder axis C is largely inclined frontward so as to assume an approximately horizontal direction.

The crankcase 30 has the left-and-right split structure, and a left half body of the crankcase 30 extends rearward thus integrally forming the power transmission portion 5.

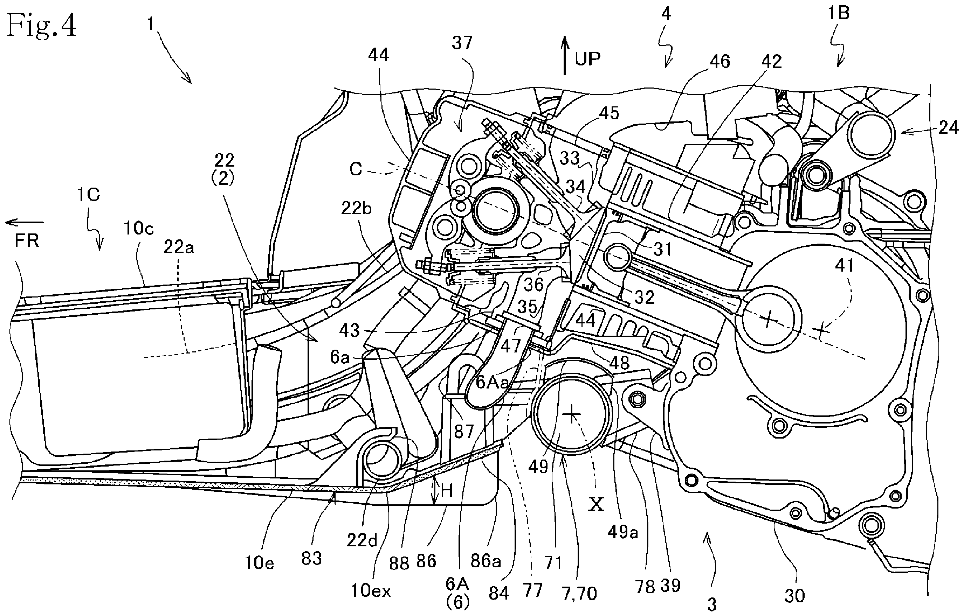

On an upper portion of the power unit 3, an intake pipe 46 shown in FIG.4 extends in a rearwardly bent manner from an intake port inlet 45 formed on an upper portion of the largely frontwardly inclined cylinder head 43 of the internal combustion engine 4.

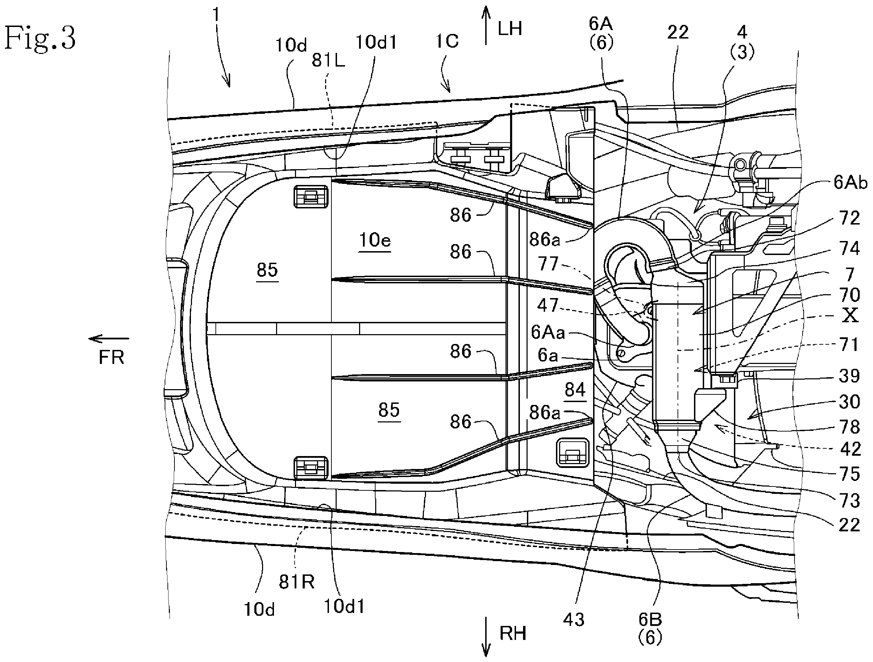

Referring to FIGS. 1 and 3, a catalyst device 7 having an approximately cylindrical shape is interposed in an exhaust pipe 6 (6A, 6B) which is connected to an exhaust port outlet 47 formed on a lower portion of the cylinder head 43. A catalyst 71 such as a three-way catalyst for purifying the exhaust gas is loaded in the catalyst device 7.

The exhaust pipe 6 is formed of a front exhaust pipe 6A and a rear exhaust pipe 6B. The front exhaust pipe 6A extending downward from the exhaust port outlet 47 is connected to a catalyst case inlet 72 (FIG. 3) formed on a left end of the catalyst device 7 having an approximately cylindrical shape with a center axis X of the catalyst device 7 directed in a vehicle width direction. The rear exhaust pipe 6B connected to a catalyst case outlet 73 (FIG. 3) formed on a right end of the catalyst device 7 is bent rearward and extends rearward along the right side of the vehicle, and is connected to a muffler 60 (FIG.1) disposed on the right side of the rear wheel 15.

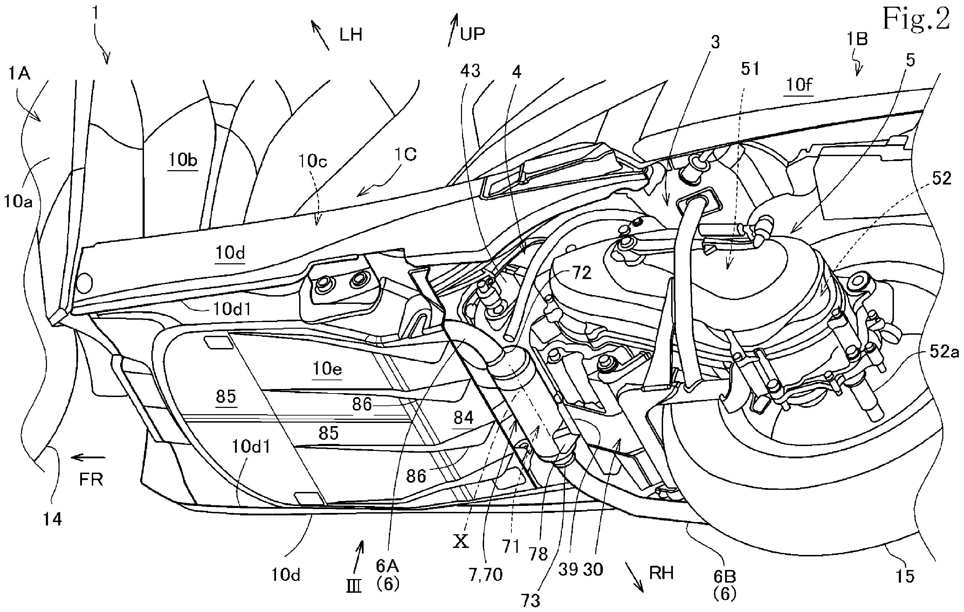

As shown in FIG. 2 which is a perspective view of a bottom surface of the motorcycle 1 as viewed from a left rear side, the foot placing portion 1C of the motorcycle 1 is disposed in front of the power unit 3. A lower portion of the foot placing portion 1C is covered by the undercover 10e, an upper portion of the foot placing portion 1C is covered by the floor cover 10c (see FIG. 1), and both side surfaces of the foot placing portion 1C between the undercover 10e and the floor cover 10c are respectively covered by the floor side covers 10d.

Left and right edges 81L and 81R (see FIG. 3) of the undercover 10e are respectively covered by the left and right floor side covers 10d in a state where each of the left and right edges 81L and 81R is positioned within lower edges 10d1 of the left and right floor side covers 10d which are bent toward a vehicle center side.

A lower portion of the power unit 3 is positioned behind the undercover 10e with a predetermined distance therebetween. The crankcase 30 and the power transmission portion 5 formed of the left half body of the crankcase 30 are disposed to extend from a front side to a rear side of the vehicle, and the rear wheel 15 is mounted on the rear axle 52a disposed on a rear portion of the power transmission portion 5.

The catalyst device 7 having an approximately cylindrical shape is positioned between the undercover 10e and the crankcase 30 and below the cylinder 42, as shown in FIG. 4, in a state where the direction of the center axis X, i.e., the longitudinal direction of the catalyst device 7 is directed in the vehicle width direction.

In this embodiment, "longitudinal direction" means a direction in which the exhaust pipe 6 (6A, 6B) is connected to both ends of the catalyst device 7 as described later.

FIG. 3 is a bottom plan view of the motorcycle 1 in an area from the undercover 10e to a part of the crankcase 30 as viewed from below the motorcycle and as viewed in a direction indicated by an arrow III in FIG. 2. As shown in the figure, an upstream end, i.e., a "connecting portion" 6Aa, of the front exhaust pipe 6A is connected by fastening to the exhaust port outlet 47, which opens downward at the cylinder head 43, by way of a mounting flange 6a. The front exhaust pipe 6A is routed in a curved manner along a lower side of the cylinder head 43 and from a slightly front side, is bent leftward in a curved shape until the front exhaust pipe 6A is directed rearward as viewed in plan view, and is further bent in a curved shape to be directed rightward.

A downstream end 6Ab of the front exhaust pipe 6A, which is bent until the front exhaust pipe 6A is directed rightward as viewed in the plan view, is connected to the catalyst case inlet 72 of the approximately cylindrical catalyst device 7 disposed on the left end side and below the cylinder 42 (see FIG.4), with the center axis X of the catalyst device 7 directed in the vehicle width direction.

That is, the catalyst device 7 to which the exhaust pipe 6 (6A, 6B) is connected in the longitudinal direction of the catalyst device 7 is interposed in the middle of the exhaust pipe 6, and is disposed at the position close to the center in the vehicle width direction with the longitudinal direction of the catalyst device 7 directed in the vehicle width direction.

As clearly shown in FIG. 3, the catalyst device 7 has the case inlet 72, and succeeding to the case inlet 72, an enlarged diameter portion 74 having a short length, a case body 70 having a cylindrical shape, a reduced diameter portion 75 having a short length, and the case outlet 73 disposed at a downstream end of the reduced diameter portion 75 in this order. The catalyst 71 for purifying exhaust gas is loaded in the catalyst case body 70.

The case outlet 73 is disposed on the right end side of the catalyst device 7 in a state that the case outlet 73 is directed rightward in the vehicle width direction, and the rear exhaust pipe 6B is connected to the case outlet 73. The rear exhaust pipe 6B is bent until the rear exhaust pipe 6B is directed rearward as viewed in plan view, and the rear exhaust pipe 6B extends to the above-mentioned muffler 60 along the right side of the vehicle.

The catalyst device 7 includes a front support stay 77 and a rear support stay 78 on an outer surface of the case body 70. The front support stay 77 is mounted on the cylinder head 43 so as to be fastened together with the mounting flange 6a of the front exhaust pipe 6A. The rear support stay 78 is fastened and mounted on a catalyst device support bracket 39 on the crankcase 30.

Accordingly, the catalyst device 7 is arranged such that the longitudinal direction of the catalyst device 7, that is, the direction of the center axis X, which is a direction in which the front exhaust pipe 6A and the rear exhaust pipe 6B are connected to the catalyst device 7, is directed in the vehicle width direction. At least a part of the catalyst device 7 is disposed in an overlapping manner with the cylinder 42 as viewed in plan view, and is fixed in a stable manner at a position close to the center in the vehicle width direction. The undercover 10e is disposed in front of the catalyst device 7.

In the present invention, the mounting structure of the catalyst device 7 is not limited to the structure used in this embodiment, and mounting of the catalyst device 7 may be suitably performed corresponding to the structure around the catalyst device.

FIG. 4 is a sectional left side view of a main part at the center of the motorcycle 1 in an arear from the undercover 10e to the part of the crankcase 30.

The power unit 3 is supported on the link members 24 at an upper portion of the crankcase 30 (see FIG. 1), the internal combustion engine 4 which forms a front portion of the crankcase 30 is a forced air-cooling-type single cylinder internal combustion engine. The cylinder 42 and the cylinder head 43 are surrounded by a shroud 48 (see FIG.1) which allows forced cooling air to pass therethrough.

The crankshaft 41 is supported in the crankcase 30 in a state where the crankshaft 41 is directed in the vehicle width direction and is driven in rotation by a piston 31 which reciprocates in the cylinder 42. The cylinder head 43 includes a combustion chamber 32, an intake port 33 and an intake valve 34, an exhaust port 35 and an exhaust valve 36, a valve train 37 and the like.

As shown in FIG. 4, the foot placing portion 1C is positioned in front of the power unit 3. As viewed in side view of the vehicle, at least a part of the catalyst device 7 is disposed below the cylinder 42, and the undercover 10e is disposed below the foot placing portion 1C and in front of the catalyst device 7.

As shown in FIG. 2, on a bottom surface 85 of the undercover 10e, a plurality of air guide ribs 86 are formed in an upright manner so as to be directed downward along the vehicle longitudinal direction. Meanwhile, as indicated by a cross section 83 (see FIG.4) of the undercover 10e taken in a vehicle longitudinal direction, a bottom surface rear end 84 of the undercover 10e is directed toward the catalyst device 7.

As described above, in this embodiment, the catalyst device 7 to which the exhaust pipe 6 (6A, 6B) is connected in the longitudinal direction is disposed such that at least a part of the catalyst device 7 is disposed below the cylinder 42, and the longitudinal direction of the catalyst device 7, that is, the center axis X, is directed in the vehicle width direction. Accordingly, the catalyst device 7 is disposed at a position close to the center in the vehicle width direction, thus preventing the catalyst device 7 from interfering with the ground when the motorcycle 1 banks.

That is, by avoiding positioning of the catalyst device 7 on a side of the vehicle, it is possible to suppress large-sizing of the motorcycle 1 in height direction for ensuring a bank angle.

In this case, the bottom surface rear end 84 of the undercover 10e is directed toward the catalyst device 7 and hence, traveling air received by the bottom surface 85 of the undercover 10e can be guided to the catalyst device 7, thereby enabling the catalyst 71 loaded in the catalyst device 7 to be cooled by making use of traveling air.

That is, as shown in FIG. 4, in the foot placing portion 1C provided in front of the catalyst device 7, vehicle equipment, wirings and the like are disposed between the floor cover 10c and the undercover 10e. There are further arranged, in the foot placing portion 1C, the pair of left and right lower frame portions 22a of the main frame 22, a cross member 22d between the pair of left and right lower frame portions 22a, and so on. Accordingly, there is a concern that cooling of a catalyst by making use of traveling air is difficult as described in hereinbefore. However, by guiding traveling air received by the bottom surface 85 of the undercover 10e to the catalyst device 7, cooling of the catalyst 71 using traveling air becomes possible.

As also shown in FIG. 4, a heat shielding plate 49 having a cylindrical plate shape in cross section is mounted above the catalyst device 7 in a radially outward position in a spaced apart manner by way of a support leg 49a such that the heat shielding plate 49 covers an approximately quarter of the circumference of the approximately cylindrical catalyst device 7.

The heat shielding plate 49 is formed of a metal plate such as a steel sheet and hence, even when the catalyst device 7 is disposed in the vicinity of the forced air cooling shroud 48 surrounding the cylinder 42, it is possible to make difficult transfer of heat of the catalyst device 7 to the shroud 48 by the heat shielding plate 49.

As will be noted from in FIGS. 3 and 4, the catalyst device 7 is positioned between the crankcase 30 and the upstream end 6Aa of the front exhaust pipe 6A which is a connecting portion with the cylinder head 43, in the longitudinal direction of the vehicle, and, as shown In FIG. 4, the catalyst device 7 is arranged at a position higher than a lowermost end 10ex of the undercover 10e as seen in side view. Further, the bottom surface rear end 84 of the undercover 10e is formed in an upwardly bent manner.

The lowermost end 10ex of the undercover 10e is positioned lower than a lowermost end of the catalyst device 7 as viewed in side view of the vehicle. In other words, the lower end of the catalyst device 7 is positioned higher than the lowermost end 10ex of the undercover 10e. The undercover 10e is formed in an upwardly bent manner from the lowermost end 10ex.

The catalyst device 7 is arranged such that the longitudinal direction of the catalyst device 7 is directed in the vehicle width direction. With such an arrangement, the catalyst device 7 can be disposed in a narrow space between the cylinder head 43 and the crankcase 30 and close to the cylinder 42, and hence the arrangement position of the catalyst device 7 can be set higher than the undercover 10e and thereby the arrangement of the catalyst device 7 is further advantageous against banking of the vehicle. Also in this case, the bottom surface rear end 84 of the undercover 10e is formed in an upwardly bent manner, and hence traveling air is guided to the catalyst device 7 arranged at a position higher than the undercover 10e and cools the catalyst 71.

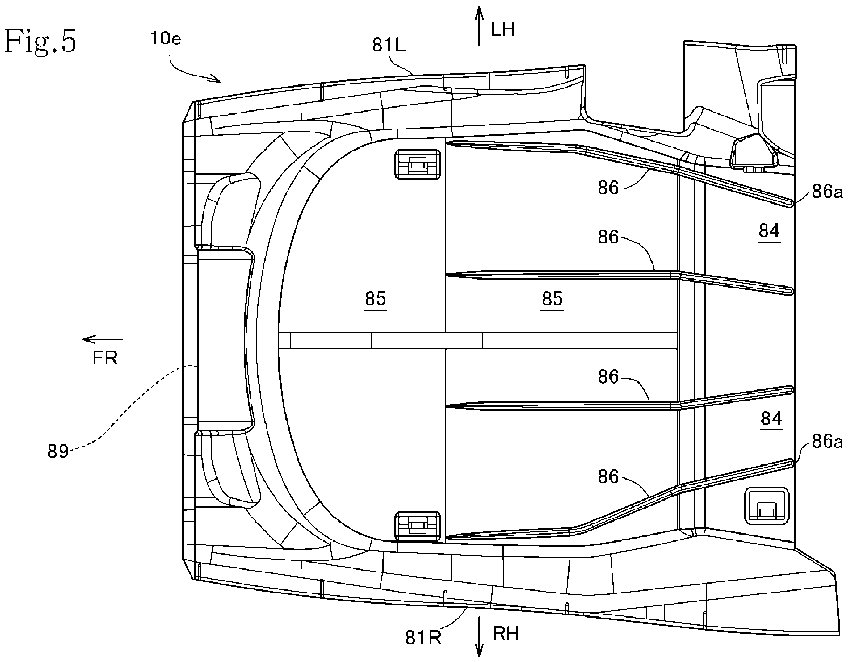

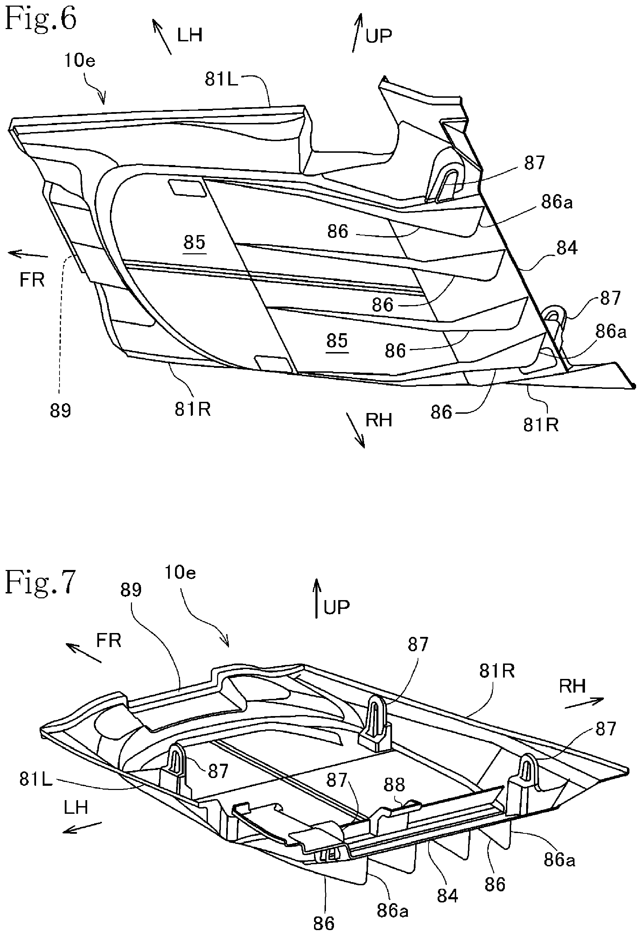

FIG. 5 is a bottom plan view of the undercover 10e in a state where the undercover 10e is removed from the motorcycle 1. FIG. 6 is a perspective view of the lower surface of the undercover 10e as viewed from a left rear side. FIG. 7 is a perspective view of the upper surface of the undercover 10e as viewed from a left rear side.

As shown in FIGS. 5 and 6, the plurality of air guide ribs 86 are formed in an upright manner on the bottom surface 85 of the undercover 10e along the vehicle longitudinal direction. Further, as shown in FIGS. 3 and 5, rear ends 86a of the air guide ribs 86 are directed toward the catalyst device 7 as viewed in plan view (bottom plan view). The rear ends 86a of the air guide ribs 86 are positioned within the size of the exhaust pipe 6 in the vehicle width direction as viewed in plan view (bottom plan view). In this manner, the air guide ribs 86 are formed on the bottom surface 85 of the undercover 10e disposed in front of the catalyst device 7 and the air guide ribs 86 are directed toward the catalyst device 7, and hence traveling air can be guided to the catalyst device 7, thus cooling the catalyst 71.

That is, the air guide ribs 86 guide traveling air to the catalyst device 7 so as to collect traveling air flowing on the bottom surface 85 of the undercover 10e within a range of the length of the catalyst device 7 disposed such that the direction of the center axis X is directed in the vehicle width direction and is arranged close to the center area in the vehicle width direction, thus enhancing the effect of cooling the catalyst 71.

As shown in FIG. 4, an upright height H of the air guide rib 86 is gradually increased from a front side to a rear side in the vehicle longitudinal direction.

With such a configuration, by gradually increasing the upright height H of the air guide rib 86 from the front side to the rear side, an effect of guiding traveling air received by the bottom surface 85 of the undercover 10e is increased. Accordingly, traveling air can be guided to the catalyst device 7 in an increased effectiveness so that the effect of cooling the catalyst 71 by traveling air can be enhanced.

On an upper surface of the undercover 10e shown in FIG. 7, symbol 87 indicates mounting stays for mounting the undercover 10e on the body frame 2, and the mounting stays 87 are fastened to the undercover mounting brackets of the body frame 2 not shown in the figures.

Symbol 88 indicates an engaging hook for making the undercover 10e engage with the body frame 2. As shown in FIG. 4, the engaging hook 88 engages with a cross member 22d extending between the pair of left and right lower frame portions 22a of the main frame 22 thus positioning the undercover 10e and supporting the load of the undercover 10e.

In the present invention, supporting and fixing of the undercover 10e are not limited to the configuration of this embodiment, and the undercover 10e may be suitably supported and fixed corresponding to the parts and the structure around the undercover 10e.

As shown in FIG. 7, a center portion of a front edge of the undercover 10e bulges downward and opens frontward thus forming an opening portion 89 which extends from the front side of the vehicle to the side of the foot placing portion 1C.

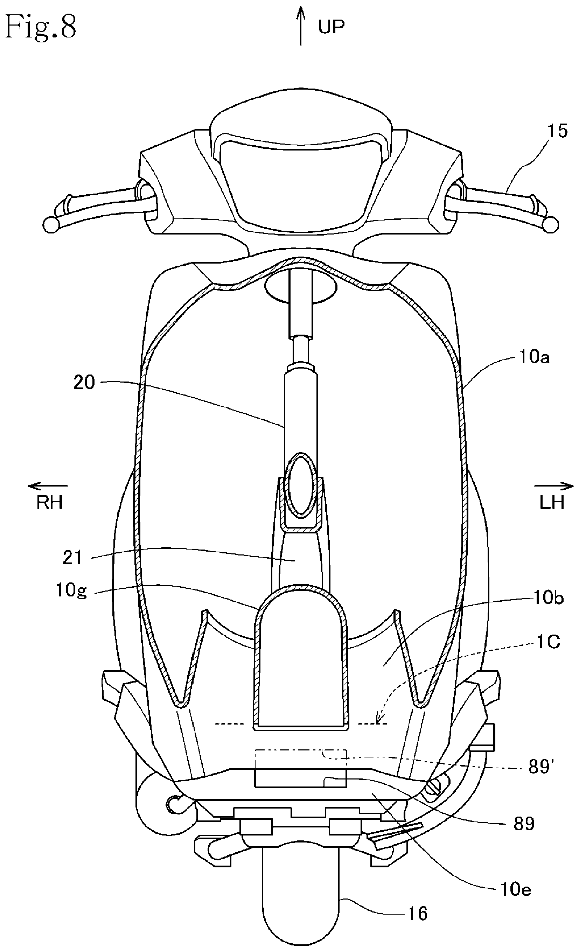

FIG. 8 is a cross-sectional front view of the motorcycle 1 behind the front wheel 14 as viewed in a direction indicated by an arrow VIII-VIII in FIG. 1. As shown in FIG. 8, the opening portion 89 of the undercover 10e is opened frontward behind the front wheel 14.

Accordingly, traveling air from a front side of the vehicle can be taken through the opening portion 89. The bottom surface rear end 84 of the undercover 10e is directed toward the catalyst device 7, and hence traveling air which passes through between the undercover 10e and the foot placing portion 1C can be guided to the catalyst device 7 and, then, the catalyst device 7 can be cooled by making use of the traveling air.

An opening portion 89' may be formed on the leg shield 10b disposed in front of the foot placing portion 1C in place of the opening portion 89 of the undercover 10e.

Although one embodiment of the present invention has been described heretofore, it is needless to say that the present invention is not limited to the above-mentioned embodiment, and the present invention includes various modifications within the scope of the appended claims.

For the sake of convenience of the description, the description is made only with respect to a configuration where the power unit and the internal combustion engine are arranged in the specific left-right disposition shown in the drawings. However, the present invention also includes cases where the power unit and the internal combustion engine are arranged at other left-right dispositions different from the disposition shown in the drawings.

An exhaust device of a saddle riding vehicle including: a swing-type power unit 3 swingably supported on a body frame 2 by way of a link member 24, with a cylinder axis C inclined frontward in an approximately horizontal direction; an exhaust pipe 6 connected to a cylinder head 43; a catalyst device 7 interposed in the middle of the exhaust pipe 6; and a foot placing portion 1C positioned in front of the power unit 3. The exhaust pipe 6 is connected to both ends of the catalyst device 7 in its longitudinal direction, and the catalyst device 7 is arranged such that at least a part thereof is disposed below a cylinder 42 as viewed in a side view, and the catalyst device 7 has its longitudinal direction oriented in a width direction of the vehicle. An undercover 10e is arranged below a foot placing portion 1C and in front of the catalyst device 7, and the undercover 10e has its bottom surface rear end 84 directed toward the catalyst device 7. The exhaust device can cool a catalyst in the catalyst device by making use of traveling air while preventing the catalyst device from interfering with a ground when the vehicle banks.

### [Reference Signs List]

1... Motorcycle ("saddle riding vehicle" according to the present invention)
1A.. Vehicle body front portion
1B... Vehicle body rear portion
1C... Foot placing portion (floor portion)
2... Body frame
3... Power unit ("swing-type power unit")
4... Internal combustion engine
5... Power transmission portion
6... Exhaust pipe
6a... Mounting flange
6A... Front exhaust pipe
6Aa... Upstream end
6Ab... Downstream end
6B... Rear exhaust pipe
7... Catalyst device
10c... Floor cover
10d... Floor side cover
10e... Undercover
10ex... Lowermost end
16... Fuel tank
22... Main frame
22a... Lower frame portion
22b... Inclined portion
23... Power unit support bracket
24... Link member
30... Crankcase
39... Catalyst device support bracket
41... Crankshaft
42... Cylinder
43... Cylinder head
47... Exhaust port outlet
48... Shroud
49... Heat shielding plate
49a... Support leg
60... Muffler
70... Case body
71... Catalyst
72... Case inlet
73... Case outlet
74... Enlarged diameter portion
75... Reduced diameter portion
77... Front support stay
78... Rear support stay
84... Bottom surface rear end
85... Bottom surface
86... Air guide rib
86a... Rear end
89... Opening portion
C... Cylinder axis
X... Center axis (of catalyst device 7, case body 70)
H... Upright height (of air guide rib 86)

## Claims

1. A saddle riding vehicle comprising an exhaust device, wherein the vehicle (1) comprises:
a body frame (2);
a swing-type power unit (3) including a cylinder (42) and a cylinder head (43) which are arranged with a cylinder axis (C) inclined frontward in an approximately horizontal direction and are mounted on a crankcase (30), the swing-type power unit (3) being swingably supported on the body frame (2) by way of a link member (24);
an exhaust pipe (6) connected to the cylinder head (43);
a catalyst device (7) provided in the exhaust pipe (6) in such a manner that the exhaust pipe (6) is connected to both ends of the catalyst device (7) in a longitudinal direction of the catalyst device (7);
the body frame (2) has a foot placing portion (1C) positioned in front of the swing-type power unit (3);
the catalyst device (7) is arranged such that at least a part of the catalyst device (7) is disposed below the cylinder (42) as viewed in a side view of the vehicle, and
an undercover (10e) is arranged below the foot placing portion (1C) and in front of the catalyst device (7),
**characterized in that**:
the longitudinal direction of the catalyst device (7) is directed in a width direction of the vehicle (1);
the undercover (10e) has a bottom surface (85) formed thereon with an upright air guide rib (86) extending in the longitudinal direction of the vehicle;
the air guide rib (86) has a rear end directed toward the catalyst device (7) as viewed in a plan view; and
a bottom surface rear end (84) of the bottom surface (85) is directed toward the catalyst device (7).

2. The saddle riding vehicle as claimed in claim 1,
wherein the catalyst device (7) is positioned between the crankcase (30) and a connecting portion (6Aa) of the exhaust pipe (6) with the cylinder head (43) with respect to a longitudinal direction of the vehicle as viewed in a side view of the vehicle, the catalyst device (7) being arranged at a position higher than a lowermost end (10ex) of the undercover (10e) as viewed in the side view of the vehicle; and
the bottom surface rear end (84) of the undercover (10e) is formed in an upwardly bent manner as viewed in the side view of the vehicle.

3. The saddle riding vehicle as claimed in claim 1,
wherein the air guide rib (86) has an upright height (H) gradually increasing from a front side to a rear side in the longitudinal direction of the vehicle.

4. The saddle riding vehicle as claimed in any one of claims 1 to 3,
wherein the undercover (10e) has front portion formed with an opening portion (89) communicating with the side of the foot placing portion (1C).

## Patentansprüche

1. Sattelfahrt-Fahrzeug mit einer Auspuffvorrichtung, wobei das Fahrzeug (1) umfasst:
einen Körperrahmen (2);
eine schwenkbare Antriebseinheit (3) mit einem Zylinder (42) und einem Zylinderkopf (43), welche mit einer in einer annähernd horizontalen Richtung nach vorne geneigten Zylinderachse (C) angeordnet sind und an ein Kurbelgehäuse (30) montiert sind, wobei die schwenkbare Antriebseinheit (3) über ein Verbindungselement (24) schwenkbar an dem Körperrahmen (2) abgestützt ist;
ein Auspuffrohr (6), das mit dem Zylinderkopf (43) verbunden ist;
eine Katalysatorvorrichtung (7), die in dem Abgasrohr (6) derart vorgesehen ist, dass das Abgasrohr (6) mit beiden Enden der Katalysatorvorrichtung (7) in einer Längsrichtung der Katalysatorvorrichtung (7) verbunden ist;
der Körperrahmen (2) einen Fußplatzierungsabschnitt (1C) aufweist, der vor der schwenkbaren Antriebseinheit (3) angeordnet ist;
die Katalysatorvorrichtung (7) so angeordnet ist, dass zumindest ein Teil der Katalysatorvorrichtung (7) in einer Seitenansicht des Fahrzeugs gesehen unterhalb des Zylinders (42) angeordnet ist, und
eine Unterabdeckung (10e) unterhalb des Fußplatzierungsabschnitts (1C) und vor der Katalysatorvorrichtung (7) angeordnet ist,
**dadurch gekennzeichnet, dass**:
die Längsrichtung der Katalysatoreinrichtung (7) in eine Breitenrichtung des Fahrzeugs (1) gerichtet ist;
die Unterabdeckung (10e) eine Bodenfläche (85) aufweist, an der eine aufrechte Luftführungsrippe (86) ausgebildet ist, die sich in der Längsrichtung des Fahrzeugs erstreckt;
die Luftführungsrippe (86) ein hinteres Ende aufweist, welches in einer Draufsicht gesehen zu der Katalysatorvorrichtung (7) hin gerichtet ist; und ein hinteres Bodenflächenende (84) der Bodenfläche (85) zu der Katalysatorvorrichtung (7) hin gerichtet ist.

2. Sattelfahrt-Fahrzeug nach Anspruch 1,
wobei die Katalysatorvorrichtung (7), in einer Seitenansicht des Fahrzeugs gesehen, zwischen dem Kurbelgehäuse (30) und einem Verbindungsabschnitt (6Aa) des Auspuffrohrs (6) mit dem Zylinderkopf (43) in Bezug auf eine Längsrichtung des Fahrzeugs positioniert ist, wobei die Katalysatorvorrichtung (7), in der Seitenansicht des Fahrzeugs gesehen, an einer Position angeordnet ist, welche höher als ein unterstes Ende (10ex) der Unterabdeckung (10e) ist; und
das hintere Bodenflächenende (84) der Unterabdeckung (10e), in der Seitenansicht des Fahrzeugs gesehen, in einer nach oben gebogenen Weise ausgebildet ist.

3. Sattelfahrt-Fahrzeug nach Anspruch 1,
wobei die Luftführungsrippe (86) eine aufrechte Höhe (H) aufweist, die in der Längsrichtung des Fahrzeugs allmählich von einer Vorderseite zu einer Rückseite zunimmt.

4. Sattelfahrt-Fahrzeug nach einem der Ansprüche 1 bis 3,
wobei die Unterabdeckung (10e) einen vorderen Abschnitt aufweist, der mit einem Öffnungsabschnitt (89) ausgebildet ist, der mit der Seite des Fußplatzierungsabschnitts (1C) in Verbindung steht.

## Revendications

1. Véhicule à selle comprenant un dispositif d'échappement, dans lequel le véhicule (1) comprend :
un cadre (2) ;
une unité de propulsion de type pivotant (3) comprenant un cylindre (42) et une culasse (43) qui sont agencés avec un axe de cylindre (C) incliné vers l'avant dans un sens approximativement horizontal et sont montés sur un carter-moteur (30), l'unité de propulsion de type pivotant (3) étant soutenue de façon pivotante sur le cadre (2) au moyen d'un élément de liaison (24) ;
un tuyau d'échappement (6) raccordé à la culasse (43) ;
un dispositif catalyseur (7) prévu dans le tuyau d'échappement (6) de manière telle que le tuyau d'échappement (6) est raccordé aux deux extrémités du dispositif catalyseur (7) dans un sens longitudinal du dispositif catalyseur (7) ;
le cadre (2) a une partie de placement du pied (1C) positionnée devant l'unité de propulsion de type pivotant (3) ;
le dispositif catalyseur (7) est agencé de telle sorte qu'au moins une partie du dispositif catalyseur (7) est disposé au-dessous du cylindre (42) vu dans une vue latérale du véhicule, et
une sous-recouvrement (10e) est agencé au-dessous de la partie de placement du pied (1c) et devant le dispositif catalyseur (7),
**caractérisé en ce que** :
le sens longitudinal du dispositif catalyseur (7) est orienté dans un sens de largeur du véhicule (1) ;
le sous-recouvrement (10e) a une surface de fond (85) formée à cette surface avec une nervure de guidage d'air verticale (86) s'étendant dans le sens longitudinal du véhicule ; la nervure de guidage d'air (86) a une extrémité arrière orientée vers le dispositif catalyseur (7) vu dans une vue en plan et une extrémité arrière de surface de fond (84) de la surface de fond (85) est orientée vers le dispositif catalyseur (7).

2. Véhicule à selle selon la revendication 1, dans lequel le dispositif catalyseur (7) est positionné entre le carter-moteur (30) et une partie de raccordement (6Aa) du tuyau d'échappement (6) avec la culasse (43) par rapport à un sens longitudinal du véhicule vu dans une vue latérale du véhicule, le dispositif catalyseur (7) étant agencé à une position plus élevée qu'une extrémité inférieure (10ex) du sous-recouvrement (10e) vu dans la vue latérale du véhicule ; et
l'extrémité arrière de la surface de fond (84) du sous-recouvrement (10e) est formée d'une manière courbée vers le haut vu dans la vue latérale du véhicule.

3. Véhicule à selle selon la revendication 1, dans lequel la nervure de guidage d'air verticale (86) a une hauteur verticale (H) augmentant progressivement d'un côté avant à un côté arrière dans le sens longitudinal du véhicule.

4. Véhicule à selle selon l'une quelconque des revendications 1 à 3, dans lequel le sous-recouvrement (10e) a une partie avant formée avec une partie d'ouverture (89) communiquant avec le côté de la partie de placement du pied (1C).
